# NEW EUROPEAN PATENT SPECIFICATION

(11) **EP 0 540 610 B2**
(45) Date of publication and mention of the opposition decision: **11.12.2002**
(45) Mention of the grant of the patent: 09.10.1996
(21) Application number: 91913600.2
(22) Date of filing: 23.07.1991
(51) Int. Cl.: B22D 11/12, B21B 1/46

(54) **METHOD AND APPARATUS OF MANUFACTURING METAL STRIP**
VERFAHREN UND VORRICHTUNG ZUR HERSTELLUNG VON METALLBAND
PROCEDE ET DISPOSITIF DE FABRICATION D'UNE BANDE METALLIQUE

(30) Priority: 23.07.1990 GB 9016142
(43) Date of publication of application: 12.05.1993
(73) Proprietor: POHANG IRON & STEEL CO., LTD., Pohang-si, Kyungsangbook-do 790-300 (KR)
(72) Inventor: PERRY, Robert Maidens 13 West View Hensingham, Cumbria CA28 8QY (GB); CORLETT, Barry Graham 23 Whitestiles Seaton, Cumbria CA14 1LL (GB)
(74) Representative: Fairbairn, Angus Chisholm
(86) International application number: GB9101233
(87) International publication number: WO92001524

(56) References cited:
- EP-A- 0 013 539
- WO-A-90/00100
- DE-C- 3 809 681
- JP-A- 63 115 652
- JP-A- 63 238 963
- Patent Abstracts of Japan, vol. 8, no. 9 (M-268)[1446], 14 January 1984; & JP, A, 58173005 (KAWASAKI SEITETSU K.K.) 11 October 1983, see the abstract
- Patent Abstracts of Japan, vol. 5, no. 203 (M-103)[875], 23 December 1981; & JP, A, 56119607 (MITSUBISHI JUKOGYO K.K.) 19 September 1981, see the abstract
- Patent Abstracts of Japan, vol. 9, no. 7 (M-350)[1730], 12 January 1985; & JP, A, 59156543 (HITACHI ZOSEN K.K.) 5 September 1984, see the abstract
- Stahl und Eisen, vol. 109, nos. 25,26, 18 December 1989, pages 29-30, see figure 7
- Hitachi Review, August 1988, vol. 37, p. 175-180
- Stahl und Eisen, 1988, vol. 108, p. 31-33

## Description

This invention relates to a method of, and apparatus for, manufacturing metal strip in which the metal strip is cast in a twin-roll caster.

It is known from JP-A-56-119607 for a metal slab to be cast in a continuous casting mould and for the slab to be hot rolled in a rolling mill train to metal strip which is subsequently coiled in coils of a convenient size. It is also known from the same Japanese specification for a metal workpiece to he cast in a twin roll caster and continuously conveyed through a looper into a heating furnace where its temperature is raised to a rolling temperature and for the workpiece to he rolled down to strip in a rolling mill train. The speed of casting and the rolling speed in the in-line rolling mill train have to he synchronised and the looper present at the inlet end of the heating furnace is used to divert the strip so as to take up any differences in these speeds.

However, if a metal strip is cast to substantially the required thickness in a roll caster and is not subsequently subjected to rolling in an in-line rolling mill train, then following the caster the strip passes through a temperature control zone where the temperature of the strip is controlled. On leaving the temperature control zone, the temperature of the strip has to he within a hand close to a predetermined temperature in order to achieve the required material condition and properties. During the start up of the casting process, the speed of the strip leaving the caster can vary. Whilst the strip temperature leaving the caster is relatively close to its steady casting temperature, the strip temperature in the temperature control zone will also vary until steady state casting speed is achieved.

JP-A-63-49350 discloses a method of manufacturing thin metal strip by casting in a twin roll caster to substantially the required thickness, cooling in a cooling zone and coiling on a coiler. A pinch roll assembly is provided at the inlet to the cooling zone and the portion of the strip from the caster to the pinch roll assembly is allowed to hang in a loop. The rotation of the caster rolls or the rotation of the coiler is adjusted to maintain the position of the bottom end of the loop within a target range.

According to a first aspect of the present invention, a method of manufacturing metal strip comprises the steps of
introducing molten metal into the gap between a pair of rotating rolls of a twin roll caster to form a metal strip; exiting the metal strip from the gap and allowing the metal strip to hang unhindered under its own weight in a loop; passing the strip between the rotating rolls of a first pinch roll assembly into a temperature control zone; passing the strip through the temperature control zone to control the temperature of the strip; exiting the strip from the temperature control zone and subsequently coiling the strip on a coiler arranged to exert tension on the strip; and wherein from the start of the casting process to at least the time when steady state operating conditions are achieved the length of the loop is allowed to change in consequence of a speed difference between the rolls of the caster and the rolls of the first pinch roll assembly; characterised in that the strip exits the temperature control zone through the rotating rolls of a second pinch roll assembly; the speed difference between the rolls of the first and second pinch roll assemblies is adjusted to keep the strip in the temperature control zone under longitudinal tension; the coiler is arranged to exert tension on the strip entering the coiler to provide a close wound coil on the coiler and that in the temperature control zone heat in the cast strip may be conserved or heat may be added to the cast strip or heat can be removed from the cast strip.

By arranging for the part of the strip exiting the roll caster to hang in a loop immediately it leaves the roll caster and before it passes through the rolls of the pinch roll assembly, that part of the strip is separated by the pinch roll assembly from the part of the strip in the temperature control zone and so the speed of these two parts of the strip can be quickly adjusted relative to each other and the length of the strip hanging in the loop adjusts itself accordingly. The required temperature of the strip exiting from the temperature control zone is achieved by adjusting any temperature control means in the temperature control zone which can be cooling, heating, insulating or any combination thereof.

The metal strip is to be coiled after it has passed through the temperature control zone. A close wound coil is provided by the coiler exerting a tension to the strip. This tension must be resisted so that no detrimental tension is applied to the strip exiting the strip caster. The sets of pinch rolls are provided to enable the speed of the strip to be controlled as it passes through the temperature control zone whilst the coiler pulls against them to provide adequate coiling tension. An embodiment of the present invention enables the casting speed and the coiling speed to be adjusted independently of each other until the temperature of the strip leaving the control zone is adjusted to the required temperature band.

To achieve better temperature control of the strip in the zone, it is necessary for the strip passing through the zone to be under longitudinal tension so that the material tends to be flat and more uniform heat treatment of the strip can be achieved.

Downstream of the control zone, there may be two further sets of pinch rolls arranged in tandem and, between these further sets of pinch rolls, the longitudinally extending edges of the strip may be trimmed, milled or otherwise conditioned. In addition, the strip may be slit into multiple strip widths. Optionally in addition, a rolling mill stand may be located between the sets of pinch rolls to provide a reduction on the thickness of the strip to provide strip in the required condition.

According to a second aspect of the invention, apparatus for manufacturing metal strip comprises a twin roll caster arranged to cast metal strip:
a temperature control zone arranged to control the temperature of metal strip moving in the direction of its length therethrough, the inlet of said control zone being spaced apart horizontally from the outlet of the caster;
a first pinch-roll assembly located adjacent to and upstream of the inlet of the control zone so that in use, metal strip continuously exiting from the outlet of the roll caster hangs unhindered under its own weight in a loop of adjustable length prior to entering the first pinch roll assembly;
a second pinch roll assembly at the exit of the temperature control zone and means for adjusting the speed difference between the rolls of the first and second pinch roll assemblies to keep the strip in the temperature control zone under longitudinal tension and a coiler located downstream of the second pinch roll assembly.

In order that the invention may be more readily understood, it will now be described, by way of example only, with reference to the accompanying drawings, in which:-
Figure 1 is a diagrammatic side elevation of apparatus for manufacturing metal strip;
Figure 2 is a side elevation of a strip line; and
Figure 3 is a plan of the strip line shown in Figure 2.

A twin-roll caster 1 is mounted on a platform 2 arranged above ground level and over a pit 3. The twin-roll caster includes a pair of rolls 4 arranged with their longitudinal axes horizontal. A temperature control zone, shown generally by reference numeral 5, extends away from the roll caster in a horizontal direction towards a coiling section 6. At the end of the zone 5 closest to the twin-roll caster there is a diverter roll 7 followed by a first set of pinch rolls 8, where at least one pair of the rolls of which can be used to steer metal strip passing between the rolls. Immediately before the coiling section 6 there are second and third sets of pinch rolls in tandem, indicated by reference numerals 9 and 10, respectively.

In use, strip material produced in the twin-roll caster in a continuous process is hung in the form of a loop 12 in the pit 3 and then passes over the diverter roll 7 and into the first set of pinch rolls 8. Thus, between the outlet of the caster and the pinch rolls 8, the strip material hangs under its own weight. Between the pinch rolls 8 and 9 the strip material can be put under longitudinal tension by creating a resistance to rotation in the pinch rolls 8. This causes the strip material to lie flat in the temperature control zone 5.

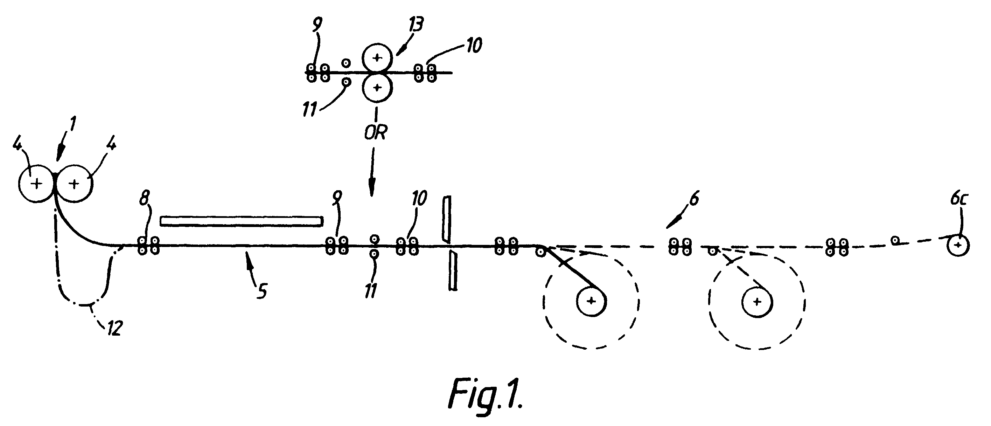

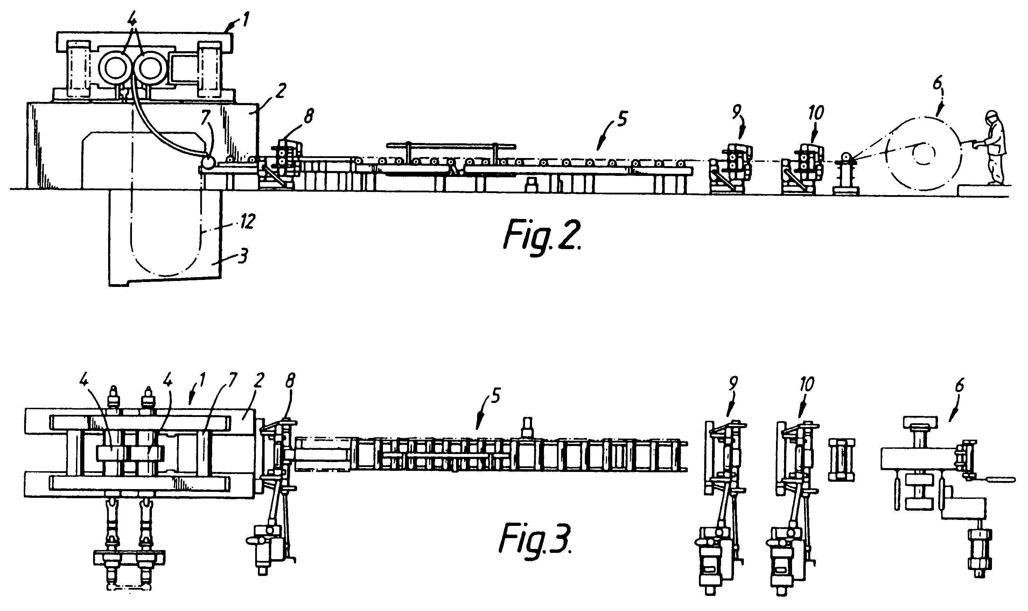

Between the sets of pinch rolls 9 and 10 a different tension can be applied to the strip material by creating a resistance to rotation in the pinch rolls 9. In the region between pinch rolls 9 and 10 there is an edge conditioning unit 11 (see Figure 1) which can, for example, be an edge trim shear, or a grinding or milling machine. A slitting station may also be provided. Again, the fact that the strip material is under longitudinal tension enables the edge conditioning to be effected efficiently. From the pinch rolls 10 the strip material passes to one or other of a pair of similar coilers in the coiling section 6, only one coiler being shown in Figures 2 and 3. Strip tension for close coiling is achieved by creating a resistance to the coiler in pinch rolls 10.

The temperature control zone may comprise heat insulating hoods, e.g., ENCO panels, fitted over the roller table to conserve heat in the cast strip or, alternatively, heat may be added to the strip material by way of electrical induction or gas heaters, or it can be removed from the strip material by way of water or water and air sprays. Part of the temperature control zone may comprise heat retention panels in order to allow the heat present in the casting to equalise across its width and thereafter, to be followed by a cooling region in which cooling liquid is sprayed on to the strip material to obtain more uniform temperature control of the strip material across its entire width.

The present invention enables strip material of the correct metallurgical composition to be formed and this may be wound in tightly wound coils with "clean" edges.

A rolling mill 13 (see Figure 1) may optionally be positioned after the pinch rolls 9 and downstream of the edge conditioner to provide a degree of rolling to the strip material prior to it being coiled.

In order to start a cast, a coil of starter strip, which is thinner and narrower than that of the strip to be cast, is located at a coiler 6c and the outer end of the starter strip material is fed back through the pinch rolls 10 and 9 and through the temperature control zone and the pinch rolls 8 and into the outlet end of the twin-roll caster. A loop of this starter strip is formed in the pit 3. The coiler and pinch rolls can then be operated so that the starter strip is tensioned to the correct values along its length and the molten metal introduced into the gap between the rolls 4 starts to solidify in contact with the starter strip. As the cast material is forced out from the twin roll caster, the length of the loop in the pit will increase whilst the coiler speed is also increased to follow that of the caster. The cast material leaving the loop in the pit passes through the pinch rolls 8, 9 and 10 and through the temperature control zone 5. As the leading end of the cast strip approaches the coiler section 6, it may be severed on the fly from the starter strip following the pinch rolls 10 and then connected on to a coiler of the coiler section 6.

Strip passing from zero tension to a tension part of a processing line can wander from side to side. This is not acceptable and it is overcome by the use of the pinch rolls 8 to steer the metal strip.

## Claims

1. A method of manufacturing metal strip comprising the steps of:
introducing molten metal into the gap between a pair of rotating rolls (4) of a twin roll caster (1) to form a metal strip; exiting the metal strip from the gap and allowing the metal strip to hang unhindered under its own weight in a loop (12); passing the strip between the rotating rolls of a first pinch roll assembly (8) into a temperature control zone (5); passing the strip through the temperature control zone (5) to control the temperature of the strip; exiting the strip from the temperature control zone and subsequently coiling the strip on a coiler arranged to exert tension on the strip; and wherein from the start of the casting process to at least the time when steady state operating conditions are achieved the length of the loop (12) is allowed to change in consequence of a speed difference between the rolls (4) of the caster and the rolls of the first pinch roll assembly (8); **characterised in that** the strip exits the temperature control zone through the rotating rolls of a second pinch roll assembly; the speed difference between the rolls of the first and second pinch roll assemblies (8, 9) is adjusted to keep the strip in the temperature control zone (5) under longitudinal tension; the coiler is arranged to exert tension on the strip entering the coiler to provide a close wound coil on the coiler and that in the temperature control zone heat in the cast strip may be conserved or heat may be added to the cast strip or heat can be removed from the cast strip.

2. A method of manufacturing metal strip comprising the steps of:
introducing molten metal into the gap between a pair of rotating rolls (4) of a twin roll caster (1) to form a metal strip; exiting the metal strip from the gap and allowing the metal strip to hang unhindered under its own weight in a loop (12); passing the strip between the rotating rolls of a first pinch roll assembly (8) into a temperature control zone (5); passing the strip through the temperature control zone (5) to control the temperature of the strip; exiting the strip from the temperature control zone and subsequently coiling the strip on a coiler arranged to exert tension on the strip; and wherein from the start of the casting process to at least the time when steady state operating conditions are achieved the length of the loop (12) is allowed to change in consequence of a speed difference between the rolls (4) of the caster and the rolls of the first pinch roll assembly (8); **characterised in that** the strip exits the temperature control zone through the rotating rolls of a second pinch roll assembly; the speed difference between the rolls of the first and second pinch roll assemblies (8, 9) is adjusted to keep the strip in the temperature control zone (5) under longitudinal tension; the coiler is arranged to exert tension on the strip entering the coiler to provide a close wound coil on the coiler and that in the temperature control zone heat in the cast strip is controlled so that on leaving the zone the temperature of the strip is within a band close to a predetermined temperature which achieves required material condition and properties.

3. A method of manufacturing metal strip as claimed in claim 1 or 2 wherein subsequent to the strip exiting between the rolls of the second pinch roll assembly (9) and prior to coiling the strip, the longitudinal edges of the strip are conditioned at an edge conditioning unit (11).

4. Apparatus for manufacturing metal strip comprising a twin roll caster (1) arranged to cast metal strip:
a temperature control zone (5) arranged to control the temperature of metal strip moving in the direction of its length therethrough, the inlet of said control zone (5) being spaced apart horizontally from the outlet of the caster (1) ; a first pinch-roll assembly (8) located adjacent to and upstream of the inlet of the control zone so that in use, metal strip continuously exiting from the outlet of the roll caster hangs unhindered under its own weight in a loop (12) of adjustable length prior to entering the first pinch roll assembly; a second pinch roll assembly (9) at the exit of the temperature control zone and means for adjusting a speed difference between the rolls of the first and second pinch roll assemblies (8,9) to keep the strip in the temperature control zone (5) under longitudinal tension and a coiler (6) located downstream of the second pinch roll assembly.

5. Apparatus as claimed in claim 4 in which an edge conditioning unit (11) to condition the longitudinally extending edges of the strip is located between the second pinch roll assembly (9) and a third pinch roll assembly (10) which is upstream of the coiling section.

6. Apparatus as claimed in claim 5 in which a rolling mill stand (3) is provided downstream of the edge conditioning means (11) and upstream of the coiling section (6).

7. Apparatus as claimed in claim 4 in which temperature control means in the control zone (5) can be cooling, heating, insulating or any combination thereof.

## Patentansprüche

1. Verfahren zum Herstellen eines Metallbandes mit den Schritten
Einführen von geschmolzenem Metall in den Zwischenraum zwischen einem Paar sich drehender Walzen (4) einer Doppelwalzen-Gießeinrichtung (1), um ein Metallband zu bilden,
Herausführen des Metallbandes aus dem Zwischenraum und Ermöglichen, dass das Metallband unter seinem Eigengewicht in einer Schlaufe (12) unbehindert hängt,
Hindurchführen des Bandes zwischen den sich drehenden Walzen einer ersten Klemmwalzezieinheit (8) zu einer Temperatursteuerzone (5),
Hindurchführen des Bandes durch die Temperatursteuerzone (5) zum Steuern der Temperatur des Bandes,
Herausführen des Bandes aus der Temperatursteuerzone und anschließendes Aufwickeln des Bandes auf einer Aufwickeleinrichtung, die vorgesehen ist, um eine Spannung auf das Band aufzubringen, und
wobei von dem Start des Gießvorgangs an bis zumindest zu dem Zeitpunkt, zu dem beständige Betriebsbedingungen erreicht sind, ermöglicht wird, dass sich die Länge der Schlaufe (12) infolge einer Geschwindigkeitsdifferenz zwischen den Walzen (4) der Gießeinrichtung und den Walzen der ersten Klemmwalzeneinheit (8) ändert,
**dadurch gekennzeichnet,**
**dass** das Band die Temperatursteuerzone über die sich drehenden Walzen einer zweiten Klemmwalzeneinheit verläßt, wobei der Geschwindigkeitsunterschied zwischen den Walzen der ersten und zweiten Klemmwalzeneinheit (8,9) so eingestellt ist, dass dieser das Band in der Temperatursteuerzone (5) unter Längszug hält, wobei die Aufwickeleinrichtung in einer solchen Weise angeordnet ist, dass diese auf das in die Aufwickeleinrichtung eintretende Band eine Spannung ausübt, damit eine eng gewikkelte Rolle auf der Aufwickeleinrichtung vorgesehen wird, und
**dass** in der Temperatursteuerzone Wärme im Gußband aufrechterhalten werden kann, oder dem Gußband Wärme zugeführt werden kann oder vom Gußband Wärme abgezogen werden kann.

2. Verfahren zum Herstellen eines Metallbandes mit den Schritten:
Einführen von geschmolzenem Metall in den Zwischenraum zwischen einem Paar sich drehender Walzen (4) einer Doppelwalzen-Gießeinrichtung (1), um ein Metallband zu bilden,
Herausführen des Metallbandes aus dem Zwischenraum und Ermöglichen, dass das Metallband unter seinem Eigengewicht in einer Schlaufe (12) unbehindert hängt,
Hindurchführen des Bandes zwischen den sich drehenden Walzen einer ersten Klemmwalzeneinheit (8) zu einer Temperatursteuerzone (5),
Hindurchführen des Bandes durch die Temperatursteuerzone (5) zum Steuern der Temperatur des Bandes,
Herausführen des Bandes aus der Temperatursteuerzone und anschließendes Aufwickeln des Bandes auf eine Aufwickeleinrichtung, die vorgesehen ist, um eine Spannung auf das Band aufzubringen, und
wobei von dem Start des Gießvorgangs an bis zumindest zu dem Zeitpunkt, zu dem beständige Betriebsbedingungen erreicht sind, ermöglicht wird, dass sich die Länge der Schlaufe (12) infolge einer Geschwindigkeitsdifferenz zwischen den Walzen (4) der Gießeinrichtung und den walzen der ersten Klemmwalzeneinheit (8) ändert,
**dadurch gekennzeichnet,**
**dass** das Band die Temperatursteuerzone über die sich drehenden Walzen einer zweiten Klemmwalzeneinheit verläßt, wobei der Geschwindigkeitsunterschied zwischen den Walzen der ersten und zweiten Klemmwalzeneinheit (8,9) so eingestellt ist, dass dieser das Band in der Temperatursteuerzone (5) unter Längszug hält, wobei die Aufwickeleinrichtung in einer solchen Weise angeordnet ist, dass diese auf das in die Aufwickeleinrichtung eintretende Band eine Spannung ausübt, damit eine eng gewikkelte Rolle auf der Aufwickeleinrichtung vorgesehen wird, und
**dass** in der Temperatursteuerzone die Wärme im Gußband gesteuert wird, so dass beim Verlassen der Zone die Temperatur des Bandes in einem Bereich nahe einer vorbestimmten Temperatur ist, mit der der erforderliche Materialzustand und die erforderlichen Materialeigenschaften erhalten werden.

3. Verfahren zum Herstellen eines Metallbandes nach Anspruch 1 oder 2, wobei nach dem Heraustreten des Bandes zwischen den Walzen der zweiten Klemmwalzeneinheit (9) und vor dessen Aufwickeln die Längskanten des Bandes in einer Kantenkonditioniereinheit (11) konditioniert werden.

4. Vorrichtung zum Herstellen eines Metallbandes mit einer zum Gießen des Metallbandes vorgesehenen Doppelwalzen-Gießeinrichtung (1) :
einer Temperatursteuerzone (5), die zum Steuern der Temperatur des Metallbandes vorgesehen ist, das sich in seiner Längsrichtung durch diese hindurch bewegt, wobei der Einlaß der Steuerzone (5) von dem Auslaß der Gießeinrichtung (1) horizontal beabstandet ist,
einer ersten Klemmwalzeneinheit (8), die benachbart zum Einlaß der Steuerzone sowie stromaufwärts von diesem so angeordnet ist, dass in Betrieb das aus dem Auslaß der Walzengießeinrichtung kontinuierlich heraustretende Metallband vor dem Eintritt in die ersten Klemmwalzeneinheit unter seinem Eigengewicht in einer Schlaufe (12) mit einstellbarer Länge unbehindert hängt, und
einer zweiten Klemmwalzeneinheit (9) am Ausgang der Temperatursteuerzone und einer Einrichtung zum Einstellen einer Geschwindigkeitsdifferenz zwischen den Walzen der ersten und zweiten Klemmwalzeneinheit (8,9), um das Band in der Temperatursteuerzone (5) unter Längszug zu halten, und
einer Aufwickeleinrichtung (6), die sich stromabwärts von der zweiten Klemmwalzeneinheit befindet.

5. Vorrichtung nach Anspruch 4, bei der eine Kantenkonditioniereinheit (11) zum Konditionieren der sich in Längsrichtung erstreckenden Kanten des Bandes zwischen der zweiten Klemmwalzeneinheit (9) und einer dritten Klemmwalzeneinheit (10) angeordnet ist, die stromaufwärts des Aufwickelabschnitts vorgesehen ist.

6. Vorrichtung nach Anspruch 5, bei der ein Walzgerüst (3) stromabwärts von der Kantenkonditioniereinrichtung (11) und stromaufwärts vom Aufwickelabschnitt (6) angeordnet ist.

7. Vorrichtung nach Anspruch 4, bei der die Temperatursteuereinrichtung in der Steuerzone (5) kühlen, erwärmen oder isolieren kann oder eine beliebige Kombination davon ausführen kann.

## Revendications

1. Procédé de fabrication d'une bande métallique comprenant les étapes consistant à :
introduire du métal fondu dans l'espacement entre deux cylindres (4) rotatifs d'une installation de coulée entre cylindres (1) pour former une bande métallique ; extraire la bande métallique de l'espacement et permettre à la bande métallique de pendre sans gêne sous l'effet de son propre poids en une boucle (12) ; faire passer la bande entre les rouleaux en rotation d'un premier ensemble (8) de rouleaux pinceurs dans une zone (5) de contrôle de la température ; faire passer la bande à travers la zone (5) de contrôle de la température pour contrôler la température de la bande ; faire sortir la bande de la zone de contrôle de la température et ensuite bobiner la bande sur une bobineuse capable d'exercer une tension sur la bande ; et selon lequel à partir du début de l'opération de coulée jusqu'à au moins le moment où des conditions opératoires stationnaires sont réalisées il est permis à la longueur de la boucle (12) de changer en fonction d'une différence de vitesse entre les cylindres (4) de l'installation de coulée et les rouleaux du premier ensemble (8) de rouleaux pinceurs; **caractérisé en ce que** la bande quitte la zone de contrôle de la température à travers les rouleaux en rotation d'un deuxième ensemble de rouleaux pinceurs ; la différence de vitesse entre les rouleaux des premier et deuxième ensembles (8, 9) de rouleaux pinceurs est ajustée pour conserver la bande dans la zone (5) de contrôle de la température sous tension longitudinale ; la bobineuse est conçue pour exercer une tension sur la bande entrant dans la bobineuse pour former une bobine à enroulement serré sur la bobineuse et **en ce que** dans la zone de contrôle de la température la chaleur dans la bande coulée peut être conservée ou de la chaleur peut être ajoutée à la bande coulée ou de la chaleur peut être enlevée à la bande coulée.

2. Procédé de fabrication d'une bande métallique comprenant les étapes consistant à :
introduire du métal fondu dans l'espacement entre deux cylindres (4) rotatifs d'une installation (1) de coulée entre cylindres pour former une bande métallique ; extraire la bande métallique de l'espacement et permettre à la bande métallique de pendre sans gêne sous l'effet de son propre poids en une boucle (12) ; faire passer la bande entre les rouleaux en rotation d'un premier ensemble (8) de rouleaux pinceurs dans une zone (5) de contrôle de la température ; faire passer la bande à travers la zone (5) de contrôle de la température pour contrôler la température de la bande ; extraire la bande de la zone de contrôle de température et ensuite bobiner la bande sur une bobineuse conçue pour exercer une tension sur la bande ; et selon lequel à partir du début de l'opération de coulée jusqu'à au moins le moment où des conditions opératoires stationnaires sont réalisées, il est permis à la longueur de la boucle (12) de changer en fonction d'une différence de vitesse entre les cylindres (4) de l'installation de coulée et les rouleaux du premier ensemble (8) de rouleaux pinceurs ; **caractérisé en ce que** la bande quitte la zone de contrôle de la température à travers les rouleaux en rotation du deuxième ensemble de rouleaux pinceurs ; la différence de vitesse entre les rouleaux des premier et deuxième ensembles (8, 9) de rouleaux pinceurs est ajustée pour conserver la bande dans la zone (5) de contrôle de la température sous une tension longitudinale ; la bobineuse est conçue pour exercer une tension sur la bande entrant dans la bobineuse pour former une bobine à enroulement serré sur la bobineuse et **en ce que** dans la zone de contrôle de la température la chaleur dans la bande coulée est contrôlée de sorte qu'en quittant la zone la température de la bande est dans une gamme proche d'une température prédéterminée qui réalise l'état et les propriétés requises pour le matériau.

3. Procédé de fabrication d'une bande métallique selon la revendication 1 ou 2 selon lequel après la sortie de la bande d'entre les rouleaux du deuxième ensemble (9) de rouleaux pinceurs et avant le bobinage de la bande, les bords longitudinaux de la bande sont conditionnés par une unité (11) de conditionnement des bords.

4. Appareil pour fabriquer une bande métallique comprenant une installation de coulée entre cylindres (1) conçue pour couler une bande métallique :
une zone (5) de contrôle de la température conçue pour contrôler la température d'une bande métallique se déplaçant dans la direction de sa longueur à travers elle, l'admission dans ladite zone (5) de contrôle étant espacée horizontalement de la sortie de l'installation de coulée (1); un premier ensemble (8) de rouleaux pinceurs situés de façon adjacente à et en amont de l'entrée de la zone de contrôle de sorte que durant l'utilisation, la bande de métal sortant en continu de la sortie de l'installation de coulée pend sans gêne sous l'effet de son propre poids en une boucle (12) de longueur ajustable avant d'entrer dans le premier ensemble de rouleaux pinceurs ; un deuxième ensemble (9) de rouleaux pinceurs à la sortie de la zone de contrôle de la température et des moyens pour ajuster une différence de vitesse entre les rouleaux des premier et deuxième ensembles (8, 9) de rouleaux pinceurs afin de garder la bande dans la zone (5) de contrôle de la température sous tension longitudinale et une bobineuse (6) située en aval du deuxième ensemble de rouleaux pinceurs.

5. Appareil selon la revendication 4, dans lequel une unité (11) de conditionnement des bords pour conditionner les bords de la bande s'étendant longitudinalement se situe entre le deuxième ensemble (9) de rouleaux pinceurs et un troisième ensemble (10) de rouleaux pinceurs situé en amont de la section de bobinage.

6. Appareil selon la revendication 5, dans lequel une cage de laminoir (3) est fournie en aval des moyens (11) de conditionnement et en amont de la section (6) de bobinage.

7. Appareil selon la revendication 4 dans lequel les moyens de contrôle de la température dans la zone (5) de contrôle peuvent être des moyens de refroidissement, de chauffage, d'isolation ou toutes combinaisons de ceux-ci.
